# EUROPÄISCHE PATENTSCHRIFT

(11) **EP 2 656 469 B1**
(45) Veröffentlichungstag und Bekanntmachung des Hinweises auf die Patenterteilung: **25.02.2015**
(21) Anmeldenummer: 11804535.0
(22) Anmeldetag: 15.12.2011
(51) Int. Cl.: H02J 3/14, A47L 15/00, D06F 58/28, D06F 33/02, G05B 11/01

(54) **VERFAHREN UND VORRICHTUNG ZUM BETREIBEN EINES HAUSHALTSGERÄTES UND HAUSHALTSGERÄT**
METHOD AND APPARATUS FOR OPERATING A DOMESTIC APPLIANCE AND DOMESTIC APPLIANCE
PROCÉDÉ ET DISPOSITIF DE FONCTIONNEMENT D'UN APPAREIL MÉNAGER ET APPAREIL MÉNAGER

(30) Priorität: 21.12.2010 DE 102010063757
(43) Veröffentlichungstag der Anmeldung: 30.10.2013
(73) Patentinhaber: BSH Bosch und Siemens Hausgeräte GmbH, 81739 München (DE)
(72) Erfinder: BÖLDT, Frank, 14656 Brieselang (DE); GROSSER, Jörg, 93077 Bad Abbach (DE)
(86) Internationale Anmeldenummer: PCT/EP2011/072835
(87) Internationale Veröffentlichungsnummer: WO 2012/084663

(56) Entgegenhaltungen:
- US-A1- 2003 178 894
- US-A1- 2006 276 938

## Beschreibung

Die Erfindung betrifft ein Verfahren zum Betreiben eines Haushaltsgerätes. Zu zumindest einer Betriebsressource werden Daten mit Informationen über ein zeitliches Kostenprofil der Betriebsressource empfangen, welches zumindest ein erstes Zeitintervall mit geringen Kosten und ein zweites Zeitintervall mit hohen Kosten für die Betriebsressource umfasst. Es wird eine Zeitdauer eines Betriebs des Haushaltgerätes mit dem ersten Zeitintervall verglichen, in welchem die Kosten für die Betriebsressource gering sind. Es wird ein Zeitpunkt für den Start des Betriebs in Abhängigkeit von einem Ergebnis des genannten Vergleiches bestimmt. Die Erfindung bezieht sich außerdem auf eine Steuereinrichtung zum Betreiben eines Haushaltsgerätes, welche zum Durchführen eines derartigen Verfahrens ausgebildet ist. Schließlich betrifft die Erfindung ein Haushaltsgerät mit einer solchen Steuereinrichtung.

Es ist in Haushalten üblich, mehrere Haushaltsgeräte gleichzeitig laufen zu lassen, nämlich beispielsweise eine Waschmaschine, eine Geschirrspülmaschine, einen Wäschetrockner und ein Kältegerät. Durchlaufen die Haushaltsgeräte die jeweiligen Programme ohne Rücksicht auf die jeweils anderen Haushaltsgeräte, so kann eine maximal zulässige Leistungsaufnahme im Haushalt oder aber in einem größeren elektrischen Netzabschnitt überschritten werden bzw. können Lastspitzen erzeugt werden, die das elektrische Versorgungsnetz überlasten. Dies geschieht beispielsweise durch ein gleichzeitiges Einschalten von Hochleistungsverbrauchern in unterschiedlichen Haushaltsgeräten. Diese Hochleistungsverbraucher können eine Heizung, ein Elektromotor und ein Kompressor sein.

Eine Abhilfe gegen die ungleichmäßige Lastverteilung schaffen so genannte intelligente Stromversorgungsnetze (Smart Grids). Solche intelligenten Stromversorgungsnetze sorgen also für eine gleichmäßige Lastverteilung in einem bestimmten elektrischen Netzabschnitt, sei es durch entsprechende Steuerbefehle an elektrische Geräte oder aber durch Übermittlung von Informationen über den zeitlichen Verlauf der Energiepreise. Die Energieversorger sind verpflichtet oder werden verpflichtet sein, transparente und flexible Tarife anzubieten. Ein Haushaltsgerät kann somit - beispielsweise über das Internet - Daten empfangen, die Informationen über den zeitlichen Verlauf der Preise für die elektrische Energie (oder aber einer anderen Betriebsressource) beinhalten, also Informationen über ein zeitliches Kostenprofil der elektrischen Energie. Das Haushaltsgerät kann diese Informationen dahingehend nutzen, dass beispielsweise ein Betrieb des Haushaltsgerätes nur zu einem Zeitpunkt eingeleitet wird, zu welchem die Kosten für die elektrische Energie am geringsten sind. Nicht nur kann durch eine solche intelligente Vorgehensweise das Stromversorgungsnetz zu bestimmten Tageszeiten entlastet werden, es können somit auch Kosten gespart werden.

Die vorliegende Erfindung geht im Wesentlichen vom Gegenstand gemäß Druckschrift US 2003/0178894 A1 aus. Dieses Dokument beschreibt ein Verfahren zur Steuerung der Leistungsaufnahme eines elektrischen Haushaltsgerätes. Das Haushaltsgerät empfängt Daten mit Informationen über die zeitliche Verteilung der Kosten für elektrische Energie. Diese zeitliche Verteilung beinhaltet einerseits ein Zeitintervall mit geringen Kosten für die Energie sowie andererseits ein Zeitintervall mit hohen Kosten für die Energie. Der Betrieb des Haushaltsgerätes kann nur dann gestartet werden, wenn der momentane bzw. aktuelle Zeitpunkt innerhalb des Zeitintervalls mit geringen Kosten liegt. Außerdem wird die Zeitdauer dieses Zeitintervalls mit einer Zeitdauer des Betriebs verglichen. Der Betrieb wird nur unter der Voraussetzung gestartet, dass die Zeitdauer des Betriebs kürzer als die Zeitdauer des genannten Zeitintervalls ist. Das im Dokument US 2003/0178894 A1 beschriebene Verfahren hat also den Nachteil, dass es Situationen geben kann, in denen die Zeitdauer des Betriebs des Haushaltsgerätes länger als die Zeitdauer des Zeitintervalls mit geringen Kosten für Energie ist. In diesen Fällen kann der Betrieb des Haushaltsgerätes nicht eingeleitet werden, und das Haushaltsgerät erfüllt nicht seine eigentliche Funktion.

Aus der Druckschrift DE 10 2005 055 648 A1 ist eine Waschmaschine bekannt, welche zur Aufbereitung von Warmwasser ausgebildet ist. Die Waschmaschine beinhaltet einen Wasserspeicher, welcher mit einer externen Wasserführung verbunden ist. Eine Steuereinheit steuert einen Aufbereitungsprozess von Warmwasser und kommuniziert mit einer externen Einheit, welche Informationen über Energiekosten für den Betrieb der Waschmaschine bereitstellt. Der Aufbereitungsprozess von Warmwasser wird abhängig von den bereitgestellten Informationen aktiviert, nämlich dann, wenn die Energiekosten für den Betrieb der Waschmaschine im Tagesverlauf am niedrigsten sind.

Aus der Druckschrift EP 0 727 668 A1 ist ein Gerätesystem bekannt, das eine Vielzahl von miteinander kommunizierenden Haushaltsgeräten beinhaltet. Die Haushaltsgeräte kommunizieren miteinander über einen Kommunikationsbus. Eine durch die Haushaltsgeräte aufgenommene Summenleistung wird durch ein Messgerät gemessen. Das Messgerät sendet Daten über den Kommunikationsbus, die Informationen über die jeweils aktuelle Summenleistung umfassen. Jedes Haushaltsgerät kann selbige Daten an dem Kommunikationsbus abgreifen und eine eigene Leistungsaufnahme unter Berücksichtigung der in den Daten enthaltenen Informationen einstellen. Die Haushaltsgeräte vergleichen die jeweils augenblickliche Summenleistung mit einem vorbestimmten Grenzwert. Überschreitet die Summenleistung den vorbestimmten Grenzwert, so reduzieren die Haushaltsgeräte ihre eigene Leistungsaufnahme.

Im Gegenstand gemäß Druckschrift DE 44 46 883 A1 wird eine Bedienperson beim Bedienen einer Waschmaschine dadurch unterstützt, dass bei Auswahl einer vorbestimmten Temperaturstufe - z. B. 95°C - ein auffälliges Signal ausgegeben wird. Mit diesem Signal wird die Bedienperson darauf aufmerksam gemacht, dass der Waschprozess bei Anwendung der ausgewählten Temperaturstufe energieaufwändig ist.

Aus der Druckschrift GB 2 416 852 A ist ein Mess- und Anzeigegerät bekannt, mit welchem eine Leistungsaufnahme eines Haushaltsgerätes gemessen werden kann. Das Mess- und Anzeigegerät umfasst einen Bildschirm, auf welchem die jeweils momentane Leistungsaufnahme des Haushaltsgeräts angezeigt wird. Darüber hinaus können am Bildschirm die Kosten für die aufgenommene elektrische Energie anzeigt werden. Das Mess- und Anzeigegerät kann einen Betrieb des Haushaltsgerätes durch Entkoppeln des Haushaltsgerätes von einem Versorgungsnetz dann unterbrechen, wenn die Kosten für die Energie eine vorbestimmte Schwelle überschreiten. Das Mess- und Anzeigegerät kann auch in einem Haushaltsgerät integriert sein, nämlich in einer Steckeinrichtung des Haushaltgerätes.

Die Druckschrift US 2008/0015742 A1 beschreibt ein System bestehend aus einer Vielzahl von Haushaltsgeräten. Jedem Haushaltsgerät ist eine Vorrichtung zugeordnet, welche zum Erzeugen von gerätespezifischen Zustandsdaten für das jeweilige Haushaltsgerät dient. Jedes Haushaltsgerät erzeugt also eigene Zustandsdaten und überträgt diese Zustandsdaten an die jeweils anderen Haushaltsgeräte. Jedes Haushaltsgeräte empfängt auch die Zustandsdaten der anderen Haushaltsgeräte. Die Vorrichtung verarbeitet diese Zustandsdaten des eigenen Haushaltsgerätes sowie die empfangen Zustandsdaten; sie entscheidet dann - unabhängig von anderen Haushaltsgeräten -, ob das eigene Haushaltsgerät in Betrieb genommen werden soll oder nicht. Die Zustandsdaten beinhalten unter anderem Informationen über die Menge der benötigten elektrischen Energie.

Aus der Druckschrift DE 697 28 496 T2 ist bekannt, einen Energieverbrauch eines Haushaltsgerätes mittels einer Anzeigeeinrichtung anzuzeigen. Der Energieverbrauch kann vorhergesagt und an einem Bildschirm angezeigt werden. Während eines Waschprozesses der Waschmaschine wird außerdem der jeweils augenblickliche Leistungsverbrauch bzw. ein aufintegrierter Energieverbrauch der Waschmaschine angezeigt.

In der WO 2005/059454 ist ein Verfahren zum kostengünstigen Entfrosten eines Kühlgerätes beschrieben. Bei diesem Verfahren wird vom Versorger Information über ein Zeitintervall mit niedrigem Tarif empfangen. Es wird geprüft, ob ein fälliger Entfrostvorgang innerhalb eines Toleranzbereichs so verschoben werden kann, daß der Entfrostvorgang im Zeitintervall mit dem niedrigen Tarif beginnt. Ist dies nicht möglich, so wird der Entfrostvorgang dennoch gestartet, ohne Rücksicht auf den momentan geltenden Tarif.

Ein weiteres Verfahren zum Betreiben eines Haushaltsgeräts, wie eine Geschirrspül- oder Waschmaschine, ist in US 2006/0276938 A1 offenbart. Bei diesem Verfahren wird zu einer Betriebsressource Daten mit Informationen über ein zeitliches Kostenprofil der Betriebsressource empfangen, wobei abhängig von diesen Informationen ein Startzeitpunkt des Haushaltsgeräts bestimmt wird.

Es ist Aufgabe der Erfindung, eine Lösung aufzuzeigen, wie bei einem Verfahren der eingangs genannten Gattung bzw. ausgehend vom Dokument US 2003/0178894 A1 einerseits die Kosten für die zumindest eine Betriebsressource gespart werden können und das elektrische Stromversorgungsnetz entlastet werden kann und andererseits auch der Betrieb des Haushaltsgerätes möglichst schnell gestartet und vollständig abgeschlossen werden kann.

Diese Aufgabe wird erfindungsgemäß durch ein Verfahren mit den Merkmalen gemäß Patentanspruch 1 gelöst, wie auch durch eine Steuereinrichtung mit den Merkmalen gemäß Patentanspruch 11 sowie durch ein Haushaltsgerät mit den Merkmalen des Anspruchs 12. Vorteilhafte Ausführungen der Erfindung sind Gegenstand der abhängigen Patentansprüche und der Beschreibung.

Ein erfindungsgemäßes Verfahren dient zum Betreiben eines Haushaltsgerätes. Zu zumindest einer Betriebsressource werden Daten mit Informationen über ein zeitliches Kostenprofil der Betriebsressource empfangen, welches zumindest ein erstes Zeitintervall mit geringen Kosten und ein zweites Zeitintervall mit hohen Kosten für die Betriebsressource umfasst. Es wird eine Zeitdauer eines Betriebs des Haushaltsgerätes (beispielsweise nach Auswahl eines bestimmten Betriebsprogramms durch eine Bedienperson bzw. bei Anwendung dieses Betriebsprogramms) mit der Zeitdauer des ersten Zeitintervalls verglichen. Dann wird ein Zeitpunkt für den Start des Betriebs abhängig von einem Ergebnis dieses Vergleiches bestimmt. Und zwar erfolgt die Bestimmung des Zeitpunktes für den Start folgendermaßen: Falls die Zeitdauer des Betriebs länger als das erste Zeitintervall ist, wird ein zeitlicher Programmabschnitt mit einem gegenüber anderen Programmabschnitten des Betriebs höheren Verbrauch der Betriebsressource ermittelt, nämlich anhand eines zeitlichen Verbrauchsprofils, welches einen Verbrauch der Betriebsressource durch das Haushaltsgerät (als Funktion der Zeit) während des Betriebs beschreibt. Der Zeitpunkt für den Start des Betriebs wird derart bestimmt, dass der Programmabschnitt mit dem hohen Verbrauch der Betriebsressource in das erste Zeitintervall fällt, also in das Zeitintervall mit geringen Kosten für die Betriebsressource.

Anders als im Gegenstand gemäß Druckschrift US 2003/0178894 A1 kann somit der Betrieb des Haushaltsgerätes auch dann gestartet werden, wenn die Zeitdauer des Betriebs länger als die des Zeitintervalls mit geringen Kosten für die Betriebsressource ist. Auf der einen Seite kann somit elektrische Energie gespart werden, denn die leistungsaufnahmeintensiven Programmabschnitte fallen in die Zeitabschnitte mit dem günstigen Tarif; auf der anderen Seite kann der Betrieb des Haushaltsgerätes auch schnell eingeleitet und somit rasch ordnungsgemäß abgeschlossen werden. Die Bedienperson muss somit nicht auf ein längeres Zeitintervall mit geringen Kosten warten, damit der gewünschte Betrieb des Haushaltsgerätes eingeleitet und abgeschlossen wird. Die Bestimmung des Zeitpunktes für den Start des Betriebs kann unter Berücksichtigung des zeitlichen Verbrauchsprofils des Haushaltsgerätes sowie unter Berücksichtigung des Kostenprofils der Betriebsressource beispielsweise derart erfolgen, dass die Kosten des gesamten Betriebs für die zumindest eine Betriebsressource am geringsten sind. Dies kann dann erreicht werden, wenn diejenigen Programmabschnitte des Betriebs, bei denen die größte Menge der Betriebsressource verbraucht wird, in das erste Zeitintervall fallen.

Unter einem Haushaltsgerät wird vorliegend ein Gerät verstanden, welches zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Kaffeevollautomat oder eine Küchemaschine. Insbesondere wird unter dem Haushaltsgerät ein solches Gerät verstanden, welches zumindest einen Hochleistungsverbraucher aufweist, d. h. einen solchen elektrischen Verbraucher, dessen Leistungsaufnahme beispielsweise 200 Watt oder 300 Watt oder 400 Watt oder 500 Watt überschreitet.

Unter dem Kostenprofil der Betriebsressource wird vorliegend insbesondere eine zeitliche Verteilung der Kosten für die Betriebsressource als Funktion der Zeit verstanden, beispielsweise im Tagesverlauf. Solche Informationen können von einem Energieversorger gesendet werden, nämlich zum Beispiel unter Vermittlung eines so genannten intelligenten Stromzählers. Dies kann beispielsweise so aussehen, dass die Informationen in Form von relativen Preisinformationen gesendet werden, nämlich beispielsweise "günstig in drei Stunden". Diese Informationen können auch ein Tarifprofil für einen bestimmten Zeitraum - beispielsweise die nächsten 24 Stunden - beschreiben. Diese Preisinformationen können auch mit einer bestimmten Genauigkeit geliefert werden, etwa mit einer zeitlichen Auflösung von 15 Minuten. Es kann auch ein vom Haushaltsgerät separates Steuergerät - etwa ein intelligenter Stromzähler - bereitgestellt sein, welches die Daten betreffen das Kostenprofil von einem Ressourcenanbieter empfängt. Diese Daten können dann an das Haushaltsgerät weitergeleitet werden oder das externe Steuergerät kann den Zeitpunkt für den Start des Betriebs auch selbst bestimmen und Steuerbefehle an das Haushaltsgerät abgeben.

Das Verbrauchsprofil beschreibt einen Verbrauch der Betriebsressource durch das Haushaltsgerät als Funktion der Zeit während des Betriebs bei Anwendung eines bestimmten Betriebsprogramms. Es kann im Haushaltsgerät bekanntlich eine Vielzahl von Betriebsprogrammen bereitgestellt bzw. abgelegt sein; zu jedem Betriebsprogramm kann ein solches Verbrauchsprofil bereitgestellt sein, welches den Verbrauch der Betriebsressource durch das Haushaltsgerät während des Betriebs bei Anwendung des jeweiligen Betriebsprogramms beschreibt. Ein solches Verbrauchsprofil kann auch nach einer jeden Auswahl des Betriebsprogramms durch den Benutzer situationsabhängig jeweils neu berechnet werden, sodass auch gegebenenfalls ausgewählte Zusatzfunktionen für das Betriebsprogramm berücksichtigt werden. Wird der Zeitpunkt für den Start des Betriebs durch ein vom Haushaltsgerät separates externes Steuergerät - etwa einen intelligenten Stromzähler - bestimmt, so kann dieses Steuergerät Daten betreffend das Verbrauchsprofil auch über das Internet oder aber direkt vom Haushaltsgerät empfangen.

In einer Ausführungsform ist die Betriebsressource beispielsweise elektrische Energie und/oder Wasser. Dann werden Daten mit Informationen über das zeitliche Kostenprofil von elektrischer Energie und/oder von Wasser als Betriebsressource empfangen, und das Verbrauchsprofil beschreibt in diesem Falle den Verbrauch der elektrischen Energie und/oder des Wassers durch das Haushaltsgerät als Funktion der Zeit während des Betriebs. Es kann somit elektrische Energie und/oder Wasser gespart werden; andererseits kann somit das elektrische Stromversorgungsnetz und/oder ein Wasserversorgungsnetz entlastet werden.

Bezüglich der Bestimmung des Zeitpunktes für den Start des Betriebs sind prinzipiell zwei Alternativen vorgesehen: Zum einen kann es eine interne Steuereinrichtung des Haushaltsgerätes sein, welche den Zeitpunkt für den Start des Betriebs festlegt. Ein Vorteil der geräteinternen Steuereinrichtung besteht darin, dass keine weiteren Komponenten außer dem Haushaltsgerät benötigt werden, sodass das Haushaltsgerät ohne ein zusätzliches separates Steuergerät auskommt. Auf der anderen Seite kann der Zeitpunkt - wie bereits ausgeführt - auch durch ein vom Haushaltsgerät separates Steuergerät bestimmt werden, nämlich beispielsweise einen intelligenten Stromzähler. Ein solches Steuergerät kann dann sowohl mit dem Haushaltsgerät als auch mit einem Anbieter der Betriebsressource kommunizieren, nämlich mit einer externen Recheneinrichtung des Anbieters. Einerseits kann somit das Steuergerät Daten mit Informationen über das zeitliche Kostenprofil empfangen; andererseits kann es auch Daten betreffend das Verbrauchsprofil des Haushaltsgerätes empfangen. Ein separates Steuergerät hat den Vorteil, dass ein solches Steuergerät auch den Betrieb von weiteren Haushaltsgeräten steuern kann; es können nämlich eine Vielzahl von Haushaltsgeräten mit einem solchen zentralen Steuergerät kommunizieren.

Also wird der Zeitpunkt für den Start des Betriebs des Haushaltsgerätes festgelegt. Auf der einen Seite kann vorgesehen sein, dass dieser Zeitpunkt als Vorschlag mit Hilfe einer Ausgabeeinrichtung ausgegeben wird. Dann kann die Bedienperson entscheiden, ob sie diesen Vorschlag annehmen möchte oder nicht. Die Bedienperson kann hier auch einen anderen, für sie günstigeren Zeitpunkt bestimmen und das Haushaltsgerät auch zu diesem anderen Zeitpunkt in Betrieb nehmen. Auf der anderen Seite kann vorgesehen sein, dass zu dem bestimmten Zeitpunkt der Betrieb benutzerunabhängig automatisch eingeleitet wird, etwa durch eine Steuereinrichtung des Haushaltsgerätes oder aber aufgrund von Steuerbefehlen eines externen Steuergerätes. Dies kann beispielsweise so aussehen, dass die Bedienperson ein bestimmtes Betriebsprogramm für den Betrieb des Haushaltsgerätes auswählt und die geräteinterne Steuereinrichtung oder das externe Steuergerät dann den günstigsten Zeitpunkt für den Start des Betriebes bestimmt und den Betrieb des Haushaltsgerätes zu diesem Zeitpunkt automatisch einleitet, ohne dass die Bedienperson den Betrieb selbst starten muss.

Wie bereits ausgeführt, kann der Zeitpunkt für den Start des Betriebs derart festgelegt werden, dass die Kosten des gesamten Betriebs für die Betriebsressource am geringsten sind. In einer Ausführungsform ist vorgesehen, dass der Zeitpunkt für den Start des Betriebs nach vorbestimmten Kriterien sowohl bezüglich der Kosten des gesamten Betriebs für die zumindest eine Betriebsressource als auch bezüglich einer Zeitdauer zwischen einem aktuellen Zeitpunkt und dem Start des Betriebs bestimmt wird. Also kann der Zeitpunkt für den Start des Betriebs sowohl in Abhängigkeit von den Kosten für die Betriebsressource als auch unter Berücksichtigung der Zeitdauer bis zum Start des Betriebs festgelegt werden. Einerseits werden somit die Kosten gespart; andererseits wird der Betrieb so früh wie möglich eingeleitet, so dass ein Kompromiss zwischen den Kosten und der Wartezeit getroffen wird. Die vorbestimmten Kriterien können verschiedenste Szenarien beinhalten: Z. B. kann jeweils ein Grenzwert sowohl für die Kosten als auch für die Zeitdauer bis zum Start des Betriebs festgelegt werden, und der Zeitpunkt für den Start kann derart festgelegt werden, dass weder die Kosten noch die Zeitdauer bis zum Start den jeweiligen Grenzwert überschreiten. Diese Grenzwerte können auch unterschiedlich für die Kosten und für die Zeitdauer bis zum Start sein. Z. B. wird für die Kosten ein relativ geringer Grenzwert vordefiniert, während für die Zeitdauer bis zum Start ein relativ hoher Grenzwert vorbestimmt werden kann. Es kann auch vorgesehen sein, dass eine Summe aus den Kosten und der Zeitdauer bis zum Start berechnet wird und der Zeitpunkt für den Start derart bestimmt wird, dass diese Summe einen Grenzwert nicht überschreitet. Es wird somit erreicht, dass einerseits Kosten gespart werden und andererseits der Betrieb relativ rasch eingeleitet und beendet wird.

In einer Ausführungsform wird eine Eingabe empfangen, durch welche ein Betriebsprogramm für den Betrieb ausgewählt wird, nämlich aus einer Vielzahl von möglichen Betriebsprogrammen. Diese Eingabe kann durch die Bedienperson an einer Bedieneinrichtung des Haushaltsgerätes vorgenommen werden. Falls die Zeitdauer des Betriebs länger als das erste Zeitintervall - also das Zeitintervall mit geringen Kosten für die Betriebsressource - ist, kann ein Betriebsprogramm vorgeschlagen werden, welches gegenüber dem ausgewählten Programm in seiner Zeitdauer kürzer und gegebenenfalls in seinem Verbrauch der Betriebsressource intensiver ist. Ist der Betrieb bei dem ausgewählten Betriebsprogramm also länger als das erste Zeitintervall, so kann statt des ausgewählten Betriebsprogramms - etwa durch eine Steuereinrichtung des Haushaltsgerätes oder aber ein externes Steuergerät - ein anderes Betriebsprogramm ("Turbo"-Programm) vorgeschlagen werden, welches eventuell mehr Energie verbraucht, jedoch deutlich kürzer als das ausgewählte Betriebsprogramm ist und somit gegebenenfalls auch komplett in das erste Zeitintervall passt. Die Bedienperson kann somit das Haushaltsgerät zum günstigsten Preis betreiben, und das elektrische Stromversorgungsnetz kann entlastet werden. Es kann auch vorgesehen sein, dass zu zumindest einem im Haushaltsgerät abgelegten Betriebsprogramm - insbesondere zu jedem Betriebsprogramm - ein alternatives ("Turbo"-)Betriebsprogramm bereitgestellt ist, welches in seiner Zeitdauer kürzer und gegebenenfalls in seinem Verbrauch der Betriebsressourcen intensiver ist als das zugeordnete "normale" Betriebsprogramm.

Das oben genannte "Turbo"-Betriebsprogramm wird bevorzugt nur dann vorgeschlagen, wenn einerseits das erste Zeitintervall relativ bald beginnt - etwa innerhalb eines vorbestimmten Zeitraums ab dem momentanen Zeitpunkt - und andererseits die Zeitdauer des ersten Zeitintervalls nicht übermäßig kürzer als die Zeitdauer des Betriebs bei dem ausgewählten Betriebsprogramm ist, also etwa wenn die Zeitdauer des ersten Zeitintervalls länger als ein vorgegebener Grenzwert ist. Liegt das erste Zeitintervall mit den geringen Kosten so weit in der Zukunft, dass es nicht in einem vordefinierten Zeitraum ab dem momentanen Zeitpunkt beginnt, und/oder ist die Zeitdauer des ersten Zeitintervalls kürzer als ein Grenzwert, so kann auch ein Betriebsprogramm ("ECO"-Programm) vorgeschlagen werden, welches gegenüber dem ausgewählten Betriebsprogramm in seinem Verbrauch der Betriebsressource sparsamer und in seiner Zeitdauer gegebenenfalls länger ist. Es kann also sowohl für die Bedienperson als auch für den Anbieter der Betriebsressource günstig sein, wenn während des zweiten Zeitintervalls mit hohen Kosten statt des ausgewählten Betriebsprogramms ein anderes "ECO"-Betriebsprogramm vorgeschlagen wird, welches länger dauert, aber dafür auch weniger Betriebsressourcen verbraucht. So könnte im Falle eines Waschprogramms beispielsweise ein automatisches Einweichen vorgeschaltet werden, sodass eine Heizphase mit einer geringen Temperatur ausreichen würde. So kann der Energieversorger eine Überlastung des Stromversorgungsnetzes sowie das Bereitstellen zusätzlicher Energieerzeugungskapazitäten vermeiden, und die Bedienperson betreibt das Haushaltsgerät insgesamt zu einem günstigen Preis. Es kann vorgesehen sein, dass zu zumindest einem im Haushaltsgerät abgelegten Betriebsprogramm - insbesondere zu jedem Betriebsprogramm, ein alternatives "ECO"-Betriebsprogramm bereitgestellt ist, welches in seinem Verbrauch der Betriebsressource sparsamer und gegebenenfalls auch länger ist.

Das Auswählen eines Betriebsprogramms durch die Bedienperson beinhaltet auch den Fall, dass die Bedienperson lediglich ein Ziel und/oder Randbedingungen vorgibt, aus denen dann ein Vorschlag für ein Betriebsprogramm gemacht wird, nämlich unter Berücksichtigung der Kosten für die Betriebsressource sowie der Netzauslastung. Im Falle einer Waschmaschine könnte die Bedienperson beispielsweise aufgefordert werden, zumindest eine der folgenden Angaben zu machen: "Art der Textilien", also die Stoffart (z. B. Baumwolle) und/oder die Art der Wäschestücke (Bettbezug, Jeans usw.), und/oder "Farbempfindlichkeit ja/nein" und/oder "Verschmutzungsgrad" und/oder "Flecken? Wenn ja, welche?" und dergleichen. Diese Eingaben können durch eine Steuereinrichtung des Haushaltsgerätes empfangen werden, die dann aus diesen Informationen einen Vorschlag für das Betriebsprogramm generiert, der sich an der aktuellen Energienetzsituation orientiert.

In einer Ausführungsform sendet das Haushaltsgerät Daten an ein externes Gerät, nämlich beispielsweise an ein externes Steuergerät - etwa einen intelligenten Stromzähler - und/oder an eine Recheneinrichtung eines Anbieters der Betriebsressource. Dazu kann das Haushaltsgerät eine entsprechende Kommunikationsschnittstelle aufweisen, über welche die Daten an das externe Gerät gesendet werden. Wird der Zeitpunkt für den Start des Betriebes durch ein externes Steuergerät bestimmt, so kann auch dieses Steuergerät die genannten Daten an eine Recheneinrichtung des Anbieters der Betriebsressource übermitteln. Die Daten können beispielsweise folgende Informationen beinhalten:
- Informationen über das zeitliche Verbrauchsprofil des Haushaltsgerätes und/oder
- Informationen über den Zeitpunkt für den Start des Betriebs und/oder
- Informationen über eine Zeitdauer des Betriebs.

Werden diese Informationen an einen Energieversorger gesendet, so kann er unter Berücksichtigung dieser Informationen auf zu erwartende Lastspitzen reagieren. So könnten für bestimmte Tageszeiten aufgrund der zu erwartenden Netzbelastung Kraftwerke hoch- oder heruntergefahren werden. Es könnte aber auch für eine andere Lastverteilung gesorgt werden, indem beispielsweise neue Tarifprofile festgelegt und an das Haushaltsgerät und/oder das externe Steuergerät versendet werden. Das Haushaltsgerät und/oder das Steuergerät kann/können dann die neuen Tarifprofile bzw. Kostenprofile dahingehend verarbeiten, dass der Betrieb des Haushaltsgerätes oder aber einzelne Programmabschnitte automatisch verschoben werden. Das Haushaltsgerät kann aber auch für eine bestimmte Zeitdauer abgeschaltet werden, so dass die zu erwartende Last im Haushalt oder aber einem anderen Netzabschnitt wieder hinreichend klein ist.

Erfindungsgemäß wird darüber hinaus eine Vorrichtung zum Betreiben eines Haushaltsgerätes bereitgestellt. Sie umfasst Mittel zum Empfangen von Daten mit Informationen über ein zeitliches Kostenprofil einer Betriebsressource, welches zumindest ein erstes Zeitintervall mit geringen Kosten und ein zweites Zeitintervall mit hohen Kosten für die Betriebsressource umfasst. Die Vorrichtung beinhaltet auch Mittel zum Vergleichen einer Zeitdauer eines Betriebs des Haushaltsgerätes mit dem ersten Zeitintervall sowie Mittel zum bestimmen eines Zeitpunktes für den Start des Betriebs abhängig von einem Ergebnis des Vergleichs. Es sind auch Mittel bereitgestellt, welche, falls die Zeitdauer des Betriebs länger als das erste Zeitintervall ist, einen zeitlichen Programmabschnitt mit einem gegenüber anderen Programmabschnitten höheren Verbrauch der Betriebsressource anhand eines zeitlichen Verbrauchsprofils ermitteln, welches einen Verbrauch der Betriebsressource durch das Haushaltsgerät während des Betriebs beschreibt. Die Vorrichtung beinhaltet auch Mittel zum Bestimmen des Zeitpunktes für den Start derart, dass der Programmabschnitt mit dem hohen Verbrauch der Betriebsressource in das erste Zeitintervall fällt.

Ein erfindungsgemäßes Haushaltsgerät beinhaltet eine erfindungsgemäße Vorrichtung.

Die mit Bezug auf das erfindungsgemäße Verfahren vorgestellten bevorzugten Ausführungsformen und deren Vorteile gelten entsprechend für die erfindungsgemäße Vorrichtung und das erfindungsgemäße Haushaltsgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, sowie auch unter Bezugnahme auf die beigefügten Zeichnungen näher erläutert.

Es zeigen:
- Fig. 1: in schematischer Darstellung ein Haushaltsgerät mit einer Vorrichtung gemäß einer Ausführungsform der Erfindung;
- Fig. 2: ein beispielhaftes zeitliches Kostenprofil einer Betriebsressource;
- Fig. 3: ein beispielhaftes zeitliches Verbrauchsprofil des Haushaltsgerätes; und
- Fig. 4: in schematischer Darstellung ein System mit einer Vorrichtung gemäß einer Ausführungsform der Erfindung.

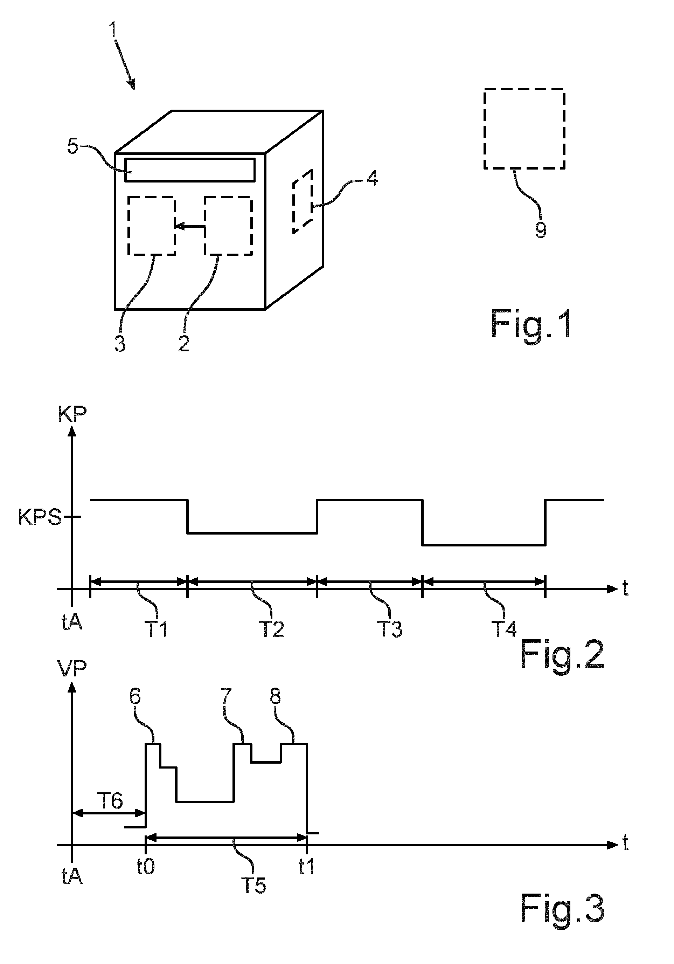

Ein in Fig. 1 in schematischer Darstellung gezeigtes Haushaltsgerät 1 kann beispielsweise eine Waschmaschine oder ein Wäschetrockner sein. Es beinhaltet eine Steuereinrichtung 2, welche eine Vorrichtung gemäß einer Ausführungsform der Erfindung oder aber ein Bestandteil der Vorrichtung ist. Die Steuereinrichtung 2 dient zum Steuern von Betriebsprozessen des Haushaltsgeräts 1. Z. B. steuert die Steuereinrichtung 2 einen elektrischen Verbraucher 3 an, etwa einen elektrischen Antriebsmotor für eine Wäschetrommel.

Das Haushaltsgerät 1 umfasst außerdem eine Kommunikationsschnittstelle 4, über welche die Steuereinrichtung 2 mit externen Einrichtungen kommunizieren bzw. Daten austauschen kann. Das Haushaltsgerät 1 weist außerdem eine Bedienblende 5 auf, welche sowohl als eine Anzeigeeinrichtung als auch eine Eingabeeinrichtung fungiert. Die Bedienblende 5 kann beispielsweise Bedienelemente sowie einen Bildschirm beinhalten.

Über die Kommunikationsschnittstelle 4 kann die Steuereinrichtung 2 Daten empfangen, welche Informationen über ein zeitliches Kostenprofil einer Betriebsressource beinhalten, nämlich insbesondere ein zeitliches Kostenprofil für elektrische Energie. Ein Beispiel für ein solches Kostenprofil KP ist in Fig. 2 dargestellt. Das Kostenprofil KP ist ein Verlauf des Preises für elektrische Energie über der Zeit t. Wie aus Fig. 2 hervorgeht, beinhaltet das Kostenprofil KP unterschiedliche Zeitintervalle T1, T2, T3, T4 mit jeweils unterschiedlichem Preis für die elektrische Energie. Während in den Zeitintervallen T1 und T3 die Kosten für elektrische Energie relativ hoch sind, ist der Preis für die Energie in den Zeitintervallen T2 und T4 geringer. Im Zeitintervall T4 ist der Preis auch ein wenig geringer als im Zeitintervall T2. Es kann auch ein Schwellwert KPS definiert werden. Diejenigen Zeitintervalle T1, T3, in denen die Kosten für die Energie höher als der Schwellwert KPS sind, können durch die Steuereinrichtung 2 als Zeitintervall mit hohen Kosten interpretiert werden. Demgegenüber können diejenigen Zeitintervalle T2, T4, in denen die Kosten geringer als der Schwellwert KPS sind, als Zeitintervalle mit geringen Kosten interpretiert werden.

In der Steuereinrichtung 2 sind auch eine Vielzahl von Betriebsprogrammen sowie eine Vielzahl von Zusatzfunktionen definiert. Zu jedem Betriebsprogramm ist in der Steuereinrichtung 2 ein Verbrauchsprofil des Haushaltsgeräts 1 abgelegt, welches einen Verbrauch der Betriebsressource - insbesondere der elektrischen Energie - durch das Haushaltsgerät 1 bei Anwendung des jeweiligen Betriebsprogramms als Funktion der Zeit t beschreibt. Ein beispielhaftes Verbrauchsprofil VP ist in Fig. 3 dargestellt. Der Betrieb beginnt zu einem Zeitpunkt t0 und endet zu einem Zeitpunkt t1. Die Zeitdauer des Betriebs beträgt hier T5. Eine Zeitdauer bzw. ein Zeitraum zwischen einem momentanen Zeitpunkt tA und dem Zeitpunkt t0, also die Zeitdauer bis zum Start des Betriebes ist mit T6 bezeichnet. Es sei an dieser Stelle angemerkt, dass für jedes abgelegte Betriebsprogramm ein unterschiedliches Verbrauchsprofil VP gegeben sein kann. Das jeweilige Verbrauchsprofil VP kann auch dynamisch angepasst werden, nämlich dann, wenn die Bedienperson eine Zusatzfunktion auswählt, etwa "Vorwäsche", "Extraspülen", oder aber "Flecken".

Die Steuereinrichtung 2 kann nun die beiden Profile, nämlich das Kostenprofil KP und das Verbrauchsprofil VP "übereinander legen". Die Steuereinrichtung 2 kann die Zeitdauer der jeweiligen Zeitintervalle T2, T4 mit geringen Kosten für die elektrische Energie mit der Zeitdauer T5 des Betriebs vergleichen. Stellt die Steuereinrichtung 2 fest, dass die Zeitdauer T5 größer als die Zeitdauer des Zeitintervalls T2 oder aber des Zeitintervalls T4 ist, so bestimmt sie den Zeitpunkt t0 für den Beginn des Betriebs derart, dass einerseits die Kosten am geringsten sind und andererseits der Betrieb so früh wie möglich gestartet wird, die Zeitdauer T6 also am geringsten ist.

Ein möglicher Betrieb des Haushaltsgerätes 1 kann beispielsweise derart aussehen:
Die Bedienperson schaltet das Haushaltsgerät 1 ein und wählt ein bestimmtes Betriebsprogramm sowie eventuell auch Zusatzfunktionen aus. Diese Eingabe empfängt die Steuereinrichtung 2. Zu dem ausgewählten Betriebsprogramm wählt die Steuereinrichtung 2 aus einem Speicher das zugeordnete Verbrauchsprofil VP aus und passt dieses Verbrauchsprofil VP gegebenenfalls in Abhängigkeit von den ausgewählten Zusatzfunktionen an. Ist beispielsweise ein Verbrauchsprofil VP gegeben, wie es in Fig. 3 dargestellt ist, so stellt die Steuereinrichtung 2 fest, dass dieses Verbrauchsprofil VP insgesamt drei Programmabschnitte mit einem relativ hohen Verbrauch der elektrischen Energie beinhaltet. Und zwar beinhaltet das Verbrauchsprofil VP gemäß Fig. 3 einen ersten leistungsintensiven Programmabschnitt 6, welcher unmittelbar nach dem Zeitpunkt t0 beginnt. Das Verbrauchsprofil VP beinhaltet außerdem zwei weitere Programmabschnitte 7, 8, welche ebenfalls leistungsintensiv sind. Diese Programmabschnitte 7, 8 beginnen jedoch erst im späteren Lauf des Betriebs. Die Steuereinrichtung 2 bestimmt die momentane bzw. aktuelle Zeit bzw. den aktuellen Zeitpunkt tA. Die Steuereinrichtung 2 stellt nun fest, dass in der nächsten Zeit insgesamt zwei Zeitintervalle T2 und T4 mit geringen Kosten für elektrische Energie gegeben sind. Die Steuereinrichtung 2 interpretiert das erste mögliche Zeitintervall, in welchem die Kosten geringer als der Schwellwert KPS sind, als ein geeignetes Zeitintervall. Im vorliegenden Beispiel ist dies das Zeitintervall T2. Die Steuereinrichtung 2 stellt auch fest, dass die Zeitdauer T5 des Betriebes länger als die Zeitdauer des Zeitintervalls T2 ist. Die Steuereinrichtung 2 bestimmt den Zeitpunkt t0 für den Start des Betriebs derart, dass die meisten Programmabschnitte 7, 8 mit dem gegenüber anderen Programmabschnitten höheren Energieverbrauch in das Zeitintervall t2 fallen. Ein Kriterium für die Bestimmung des Zeitpunktes t0 für den Start des Betriebs kann beinhalten, dass die maximal mögliche elektrische Energie bzw. die maximal mögliche Menge der Betriebsressource während des Zeitintervalls T2 verbraucht wird. Somit sind auch die Kosten für diese Betriebsressource am geringsten. Es kann auch ein Kriterium für die Zeitdauer T6 bis zum Zeitpunkt t0 definiert werden: Der Zeitpunkt t0 kann so bestimmt werden, dass die Zeitdauer T6 einen vorbestimmten Grenzwert nicht überschreitet.

Also wird durch die Steuereinrichtung 2 der Zeitpunkt t0 für den Start des Betriebs des Haushaltsgerätes 1 bestimmt. Nun kann die Steuereinrichtung 2 entweder den Betrieb automatisch zu dem bestimmten Zeitpunkt t0 starten, nämlich benutzerunabhängig, oder die Steuereinrichtung 2 kann den Zeitpunkt t0 als einen Vorschlag mit Hilfe der Bedienblende 5 ausgeben. In diesem Falle kann die Bedienperson dann entscheiden, ob sie diesen Vorschlag annimmt oder einen anderen Zeitpunkt definiert. Dies kann auch so aussehen, dass die Bedienperson zwischen zwei verschiedenen Betriebsmodi des Haushaltsgerätes 1 mithilfe der Bedienblende 5 umschalten kann: In einem ersten Modus wird der Betrieb benutzerunabhängig, also automatisch durch die Steuereinrichtung 2 zu dem festgelegten Zeitpunkt t0 gestartet. In einem zweiten Modus kann der Vorschlag ausgegeben werden.

Eine weitere Möglichkeit besteht darin, dass die Bedienperson mithilfe der Bedienblende 5 über eine Zeitvorwahlfunktion den Startpunkt t0 oder aber einen Endpunkt für den Betrieb definiert und die Steuereinrichtung 2 eine akustische und/oder eine optische Ausgabe erzeugt. Durch diese Ausgabe kann die Bedienperson darüber informiert werden, ob der gewählte Startpunkt t0 bzw. der Endpunkt hinsichtlich der genannten Kriterien bezüglich der Kosten und/oder der Zeitdauer T6 günstig ist oder nicht.

Ist die Zeitdauer T5 des Betriebs länger als die Zeitdauer des Zeitintervalls T2, so kann die Steuereinrichtung 2 auch ein alternatives Betriebsprogramm vorschlagen, nämlich mit Hilfe der Bedienblende 5. Dies kann so aussehen, dass zu jedem Betriebsprogramm ein alternatives Betriebsprogramm in der Steuereinrichtung 2 abgelegt ist, nämlich ein "Turbo"-Betriebsprogramm. Dieses "Turbo"-Betriebsprogramm ist kürzer als das zugeordnete "normale" Betriebsprogramm und kann gegebenenfalls auch Energieintensiver sein. Es wird somit erreicht, dass zumindest ein überwiegender zeitlicher Anteil des Betriebs in das Zeitintervall T2 fällt. Das "Turbo"-Betriebsprogramm kann auch nur unter der Voraussetzung vorgeschlagen werden, dass das Zeitintervall T2 länger als ein vorbestimmter Grenzwert ist.

Beginnt das Zeitintervall T2 nicht in einem vorbestimmten Zeitraum ab dem momentanen Zeitpunkt tA und/oder ist seine Zeitdauer länger als der Grenzwert, so kann durch die Steuerungseinrichtung 2 auch ein weiteres alternatives Betriebsprogramm, nämlich ein "ECO"-Betriebsprogramm, vorgeschlagen werden und der Zeitpunkt t0 für den Start des Betriebs kann auch deutlich vor dem Beginn des Zeitintervalls T2 liegen. Auch hier kann zu jedem Betriebsprogramm ein alternatives "ECO"-Betriebsprogramm in der Steuereinrichtung 2 abgelegt sein, welches gegenüber dem "normalen" Betriebsprogramm weniger Energie verbraucht und gegebenenfalls auch länger dauert. Am Beispiel des in Fig. 3 dargestellten Verbrauchsprofils VP kann der Programmabschnitt 6 beispielsweise durch einen Programmabschnitt ersetzt werden, welcher länger dauert, jedoch deutlich weniger Energie verbraucht. In diesem Falle kann der Zeitpunkt t0 für den Start des Betriebs zeitlich vorverlegt werden. Auf diesem Wege gelingt es, einerseits elektrische Energie zu sparen und andererseits das elektrische Stromversorgungsnetz zu entlasten.

Wie bereits ausgeführt, empfängt die Steuereinrichtung 2 - über die Kommunikationsschnittstelle 4 - Daten mit Informationen über das Kostenprofil KP. Diese Daten kann die Steuereinrichtung 2 von einem externen bzw. vom Haushaltsgerät 1 separaten Steuergerät 9 empfangen, welches z. B. ein so genannter intelligenter Stromzähler ist. Das Steuergerät 9 kann mit dem Haushaltsgerät 1 z. B. über einen Kommunikationsbus gekoppelt sein (zum Beispiel Power Line Communication). Alternativ können die Daten auch über einen drahtlosen Kommunikationskanal übertragen werden.

Das Steuergerät kann ebenfalls ein Bestandteil der genanten Vorrichtung gemäß einer Ausführungsform der Erfindung sein.

Das Steuergerät 9 ist mit einer Recheneinrichtung eines Energieversorgers gekoppelt und kann mit dieser externen Recheneinrichtung Daten austauschen. Das Steuergerät 9 empfängt die Daten betreffend das Kostenprofil KP von dieser Recheneinrichtung des Energieanbieters und leitet sie weiter an das Haushaltsgerät 1.

In einem weiteren Ausführungsbeispiel ist vorgesehen, dass das Steuergerät 9 auch den Betrieb des Haushaltsgeräts 1 steuert; das Steuergerät 9 kann die Funktion der Bestimmung des Zeitpunktes t0 für den Start des Betriebs übernehmen. In diesem Falle kann die Steuereinrichtung 2 des Haushaltsgeräts 1 Daten an das Steuergerät 9 übertragen, welche Informationen über das Verbrauchsprofil VP beinhalten. Dies hat den Vorteil, dass das Steuergerät 9 auch Daten anderer Haushaltsgeräte bei der Bestimmung des Zeitpunktes t0 für den Start des Betriebs berücksichtigen kann. Das Steuergerät 9 kann auch in das Haushaltsgerät 1 integriert werden oder die Funktionen des Steuergeräts 9 können durch die Steuereinrichtung 2 übernommen werden.

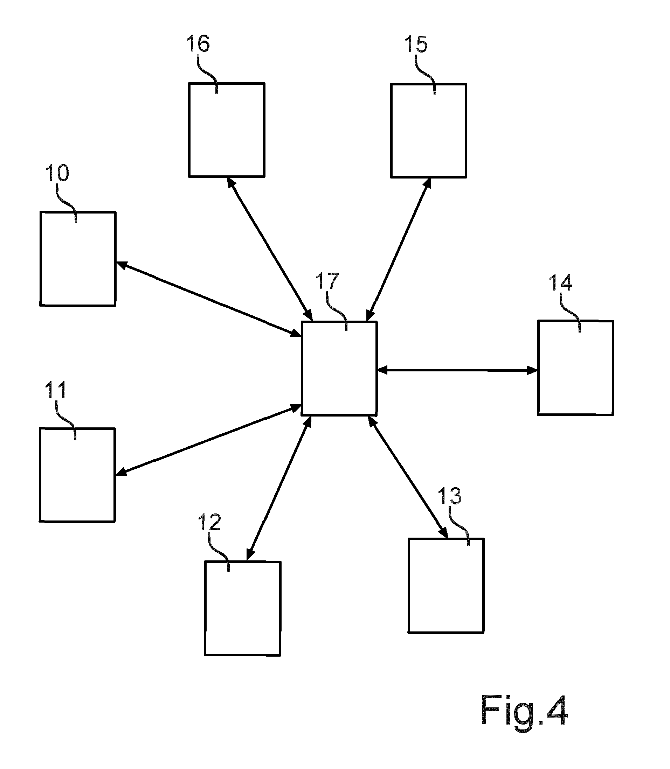

In Fig. 4 ist ein System gemäß einer Ausführungsform der Erfindung dargestellt. Es beinhaltet eine Vielzahl von Haushaltsgeräten 10 bis 16, wie auch ein externes Steuergerät 17, etwa den genanten intelligenten Stromzähler. Das Steuergerät 17 ist eine Vorrichtung gemäß einer Ausführungsform der Erfindung. Das Steuergerät 17 ist ein für alle Haushaltsgeräte 10 bis 16 gemeinsames Steuergerät. Das System gemäß Fig. 4 ist ein intelligentes Stromversorgungsnetz; die Haushaltsgeräte 10 bis 16 können Geräte eines einzigen Haushaltes sein oder sie können Geräte eines größeren Stromnetzabschnitts sein. Das Steuergerät 17 steuert die Betriebe der jeweiligen Haushaltsgeräte 10 bis 16. Und zwar empfängt das Steuergerät 17 Daten von einem Energieanbieter, welche Informationen über das Kostenprofil KP beinhalten. Von den jeweiligen Haushaltsgeräten 10 bis 16 empfängt das Steuergerät 17 ebenfalls Daten, welche Informationen über die jeweiligen Verbrauchsprofile VP beinhalten. Das Steuergerät 17 kann den jeweiligen Zeitpunkt t0 für den Start der Betriebe der Haushaltsgeräte 10 bis 16 bestimmen, nämlich wie oben bereits ausgeführt. Das Steuergerät 17 kann hier auch weitere Kriterien berücksichtigen: Zum Beispiel können die jeweiligen Zeitpunkt t0 derart festgelegt werden, dass ein vorbestimmter Grenzwert für die momentane elektrische Leistung nicht überschritten wird.

Die Haushaltsgeräte 10 bis 16 können auch die jeweiligen Verbrauchsprofile VP während des Betriebs anpassen und die angepassten Verbrauchsprofile an das Steuergerät 17 übermitteln. Dies kann beispielsweise so erfolgen, dass eine Waschmaschine eine Beladungserkennung vornimmt und dann die Zeitdauer einer Heizphase abhängig von der Beladung korrigiert. Dieses korrigierte Verbrauchsprofil VP kann das Steuergerät 17 bei der Steuerung weiterer Haushaltsgeräte 10 bis 16 berücksichtigen.

Das Steuergerät 17 kann auch in eines der Haushaltsgeräte 10 bis 16 integriert sein.

### Bezugszeichenliste

- 1: Haushaltsgerät
- 2: Steuereinrichtung
- 3: elektrischer Verbraucher
- 4: Kommunikationsschnittstelle
- 5: Bedienblende
- 6: Programmabschnitt
- 7: Programmabschnitt
- 8: Programmabschnitt
- 9: Steuergerät
- 10: Haushaltsgerät
- 11: Haushaltsgerät
- 12: Haushaltsgerät
- 13: Haushaltsgerät
- 14: Haushaltsgerät
- 15: Haushaltsgerät
- 16: Haushaltsgerät
- 17: Steuergerät
- T1, T2, T3, T4: Zeitintervall
- T5, T6: Zeitdauer
- t0: Zeitpunkt
- t1: Zeitpunkt
- tA: Zeitpunkt
- t: Zeit
- VP: Verbrauchsprofil
- KP: Kostenprofil
- KPS: Schwellwert

## Patentansprüche

1. Verfahren zum Betreiben eines Haushaltsgerätes (1, 10 - 16) durch:
- zu zumindest einer Betriebsressource Empfangen von Daten mit Informationen über ein zeitliches Kostenprofil (KP) der Betriebsressource, welches zumindest ein erstes Zeitintervall (T2, T4) mit geringen Kosten und ein zweites Zeitintervall (T1, T3) mit hohen Kosten für die Betriebsressource umfasst,
- Vergleichen einer Zeitdauer (T5) eines Betriebs des Haushaltsgerätes (1, 10 - 16) mit dem ersten Zeitintervall (T2, T4) und
- Bestimmen eines Zeitpunktes (t0) für den Start des Betriebs abhängig von einem Ergebnis des Vergleichs,
**gekennzeichnet durch**
- falls die Zeitdauer (T5) des Betriebs länger als das erste Zeitintervall (T2, T4) ist, Ermitteln eines zeitlichen Programmabschnitts (6, 7, 8) mit einem gegenüber anderen Programmabschnitten des Betriebs höheren Verbrauch der Betriebsressource anhand eines zeitlichen Verbrauchsprofils (VP), welches einen Verbrauch der Betriebsressource durch das Haushaltsgerät (1, 10 - 16) während des Betriebs beschreibt, und
- Bestimmen des Zeitpunktes (t0) für den Start derart, dass der Programmabschnitt (6, 7, 8) mit dem hohen Verbrauch der Betriebsressource in das erste Zeitintervall (T2, T4) fällt.

2. Verfahren nach Anspruch 1, **dadurch gekennzeichnet, dass** Daten mit Informationen über das zeitliche Kostenprofil (KP) von elektrischer Energie und/oder von Wasser als Betriebsressource empfangen werden, und dass das Verbrauchsprofil (VP) den Verbrauch der elektrischen Energie und/oder des Wassers durch das Haushaltsgerät (1, 10 - 16) als Funktion der Zeit (t) während des Betriebs beschreibt.

3. Verfahren nach Anspruch 1 oder 2, **dadurch gekennzeichnet, dass** der Zeitpunkt (t0) für den Start des Betriebs durch eine geräteinterne Steuereinrichtung (2) des Haushaltsgerätes (1, 10 - 16) bestimmt wird,

4. Verfahren nach Anspruch 1 oder 2, **dadurch gekennzeichnet, dass** der Zeitpunkt (t0) für den Start des Betriebs durch ein vom Haushaltsgerät (1, 10 - 16) separates Steuergerät (9, 17) bestimmt wird, welches Daten mit Informationen über den Zeitpunkt (t0) an das Haushaltsgerät (1, 10 - 16) übermittelt.

5. Verfahren nach einem der vorhergehenden Ansprüche, **dadurch gekennzeichnet, dass** mithilfe einer Ausgabeeinrichtung (5) der Zeitpunkt (t0) für den Start als Vorschlag ausgegeben wird.

6. Verfahren nach einem der Ansprüche 1 bis 4, **dadurch gekennzeichnet, dass** zu dem bestimmten Zeitpunkt (t0) der Betrieb durch eine Steuereinrichtung (2, 9) automatisch eingeleitet wird.

7. Verfahren nach einem der vorhergehenden Ansprüche, **dadurch gekennzeichnet, dass** der Zeitpunkt (t0) für den Start des Betriebs nach vorbestimmten Kriterien bezüglich sowohl Kosten des gesamten Betriebs für die zumindest eine Betriebsressource als auch einer Zeitdauer (T6) zwischen einem aktuellen Zeitpunkt (tA) und dem Start des Betriebs bestimmt wird.

8. Verfahren nach einem der vorhergehenden Ansprüche, **gekennzeichnet durch**:
- Empfangen einer Eingabe, welche an einer Bedieneinrichtung (5) vorgenommen wird und **durch** welche ein Betriebsprogramm für den Betrieb ausgewählt wird, und
- falls die Zeitdauer (T5) des Betriebs länger als das erste Zeitintervall (T2, T4) ist, Vorschlagen eines Betriebsprogramms, welches gegenüber dem ausgewählten Betriebsprogramm in seiner Zeitdauer (T5) kürzer ist.

9. Verfahren nach einem der vorhergehenden Ansprüche, **gekennzeichnet durch**:
- Empfangen einer Eingabe, welche an einer Bedieneinrichtung (5) vorgenommen wird und **durch** welche ein Betriebsprogramm für den Betrieb ausgewählt wird, und
- falls das erste Zeitintervall (T2, T4) nicht in einem vordefinierten Zeitraum ab dem momentan Zeitpunkt (tA) beginnt und/oder das erste Zeitintervall (T2, T4) kürzer als ein Grenzwert ist, Vorschlagen eines Betriebsprogramms, welches gegenüber dem ausgewählten Betriebsprogramm in seinem Verbrauch der Betriebsressource sparsamer ist.

10. Verfahren nach einem der vorhergehenden Ansprüche, **dadurch gekennzeichnet, dass** das Haushaltsgerät an ein externes Gerät (9, 17) übermittelt:
- Daten mit Informationen über das zeitliche Verbrauchsprofil (VP) des Haushaltsgerätes (1, 10 - 16) und/oder
- Daten mit Informationen über den Zeitpunkt (t0) für den Start des Betriebs und/oder
- Daten mit Informationen über eine Zeitdauer (T5) des Betriebs.

11. Vorrichtung (2, 9, 17) zum Betreiben eines Haushaltsgerätes (1, 10 - 16), mit:
- Mitteln (2, 9, 17) zum Empfangen von Daten mit Informationen über ein zeitliches Kostenprofil (KP) einer Betriebsressource, welches zumindest ein erstes Zeitintervall (T2, T4) mit geringen Kosten und ein zweites Zeitintervall (T2, T4) mit hohen Kosten für die Betriebsressource umfasst,
- Mitteln (2, 9, 17) zum Vergleichen einer Zeitdauer (T5) eines Betriebs des Haushaltsgerätes (1, 10 - 16) mit dem ersten Zeitintervall (T2, T4) und
- Mitteln (2, 9, 17) zum Bestimmen eines Zeitpunktes (t0) für den Start des Betriebs abhängig von einem Ergebnis des Vergleichs,
**gekennzeichnet durch**
- Mittel (2, 9, 17) zum Ermitteln eines zeitlichen Programmabschnitts (6, 7, 8) mit einem gegenüber anderen Programmabschnitten des Betriebs höheren Verbrauch der Betriebsressource anhand eines zeitlichen Verbrauchsprofils (VP), welches einen Verbrauch der Betriebsressource durch das Haushaltsgerät (1,10 16) während des Betriebs beschreibt, falls die Zeitdauer (T5) des Betriebs länger als das erste Zeitintervall (T2, T4) ist und
- Mittel (2, 9, 17) zum Bestimmen des Zeitpunktes (t0) für den Start derart, dass der Programmabschnitt (6, 7, 8) mit dem hohen Verbrauch der Betriebsressource in das erste Zeitintervall (T2, T4) fällt.

12. Haushaltsgerät (1, 10 - 16) mit einer Vorrichtung (2, 9, 17) nach Anspruch 11, welches mit der Vorrichtung (2, 9, 17) betreibbar ist.

## Claims

1. Method of operating a domestic appliance (1, 10 - 16) by:
- receiving data, with respect to at least one operating resource, with items of information about a time-based costs profile (KP) of the operating resource, which comprises at least one first time interval (T2, T4) with low costs and second time interval (T1, T3) with high costs for the operating resource,
- comparing a time duration (T5) of an operation of the domestic appliance (1, 10 - 16) with the first time interval (T2, T4) and
- determining a time instant (t0) for the start of the operation in dependence on a result of the comparison,
**characterised by**
- determining - if the time duration (T5) of the operation is longer than the first time interval (T2, T4) - a time-based program segment (6, 7, 8) with a higher consumption, by comparison with other program segments of the operation, of the operating resource on the basis of a time-based consumption profile (VP) describing consumption of the operating resource by the domestic appliance (1, 10 - 16) during the operation and
- so determining the time instant (t0) for the start that the program segment (6, 7, 8) with the high consumption of the operating resource falls into the first time interval (T2, T4).

2. Method according to claim 1, **characterised in that** data with items of information about the time-based costs profile (KP) of electrical energy and/or water as operating resource are received and that the consumption profile (VP) describes the consumption of the electrical energy and/or the water by the domestic appliance (1, 10 - 16) as a function of time (t) during the operation.

3. Method according to claim 1 or 2, **characterised in that** the time instant (t0) for the start of the operation is determined by a control device (2) of the domestic appliance (1, 10 - 16), the device being internal to the appliance.

4. Method according to claim 1 or 2, **characterised in that** the time instant (t0) for the start of the operation is determined by control apparatus (9, 17), which is separate from the domestic appliance (1, 10 - 16) and which transmits data with items of information about the time instant (t0) to the domestic appliance (1, 10 - 16).

5. Method according to any one of the preceding claims, **characterised in that** the time instant (t0) for the start is issued with the help of an output device (5) as a proposal.

6. Method according to any one of claims 1 to 4, **characterised in that** the operation is automatically initiated by a control device (2, 9) at the determined time instant (t0).

7. Method according to any one of the preceding claims, **characterised in that** the time instant (t0) for the start of the operation is determined in accordance with predetermined criteria with respect to not only costs of the entire operation for the at least one operating resource, but also a time duration (T6) between a current time instant (tA) and the start of the operation.

8. Method according to any one of the preceding claims, **characterised by**:
- receiving an input which is carried out at a control device (5) and by which an operating program for the operation is selected and
- if the time duration (T5) is longer than the first time interval (T2, T4), proposing an operating program which is shorter in its time duration (T5) by comparison with the selected operating program.

9. Method according to any one of the preceding claims, **characterised by**:
- receiving an input which is carried out at a control device (5) and by which an operating program for the operation is selected and
- if the first time interval (T2, T4) does not begin in a predefined time period after the instantaneous time instant (tA) and/or if the first time interval (T2, T4) is shorter than a limit value, proposing an operating program which is more sparing in its consumption of the operating resource by comparison with the selected operating program.

10. Method according to any one of the preceding claims, **characterised in that** the domestic appliance transmits to external apparatus (9, 17):
- data with items of information about the time-based consumption profile (VP) of the domestic appliance (1, 10 - 16) and/or
- data with items of information about the time instant (t0) for the start of the operation and/or
- data with items of information about a time duration (T5) of the operation.

11. Device (2, 9, 17) for operating a domestic appliance (1, 10 - 16), comprising:
- means (2, 9, 17) for reception of data with items of information about a time-based costs profile (KP) of an operating resource comprising at least one first time interval (T2, T4) with low costs and second time interval (T2, T4) with high costs for the operating resource,
- means (2, 9 17) for comparison of a time duration (T5) of an operation of the domestic appliance (1, 10 - 16) with the first time interval (T2, T4) and
- means (2, 9 17) for determination of a time instant (t0) for the start of the operation in dependence on a result of the comparison,
**characterised by**
- means (2, 9 17) for determining a time-based program segment (6, 7, 8) with a consumption of the operating resource, which is higher by comparison with other program segments of the operation, on the basis of a time-based consumption profile (VP), which describes consumption of the operating resource by the domestic appliance (1, 10 - 16) during the operation, if the time duration (T5) of the operation is longer than the first time interval (T2, T4) and
- means (2, 9, 17) for so determining the time instant (t0) for the start that the program segment (6, 7, 8) with the high consumption of the operating resource falls into the first time interval (T2, T4).

12. Domestic appliance (1, 10 - 16) with a device (2, 9 17) according to claim 11, which is operable by the device (2, 9, 17).

## Revendications

1. Procédé de fonctionnement d'un appareil ménager (1, 10 - 16) par :
- réception, pour au moins une ressource d'exploitation, de données avec informations sur un profil de coûts temporel (KP) de la ressource d'exploitation, lequel comprend au moins un premier intervalle de temps (T2, T4) à moindres coûts et un deuxième intervalle de temps (T1, T3) à coûts élevés pour la ressource d'exploitation,
- comparaison d'une durée (T5) d'un fonctionnement de l'appareil ménager (1, 10 - 16) avec le premier intervalle de temps (T2, T4), et
- détermination d'un moment (t0) pour le départ du fonctionnement en fonction d'un résultat de la comparaison,
**caractérisé par**
- au cas où la durée (T5) du fonctionnement soit plus longue que le premier intervalle de temps (T2, T4), détermination d'un segment de programme temporel (6, 7, 8) avec une consommation de la ressource d'exploitation plus élevée par rapport à d'autres segments de programme du fonctionnement, à l'aide d'un profil de consommation temporel (VP) qui décrit une consommation de la ressource d'exploitation par l'appareil ménager (1, 10 -16) pendant le fonctionnement et,
- détermination du moment (t0) pour le départ de manière à ce que le segment de programme (6, 7, 8) coïncide avec la consommation élevée de la ressource d'exploitation dans le premier intervalle de temps (T2, T4).

2. Procédé selon la revendication 1, **caractérisé en ce que** des données avec des informations sur le profil de coûts temporel (KP) d'énergie électrique et/ou d'eau sont reçues en tant que ressource d'exploitation, et **en ce que** le profil de consommation (VP) décrit la consommation d'énergie électrique et/ou de l'eau par l'appareil ménager (1, 10 - 16) en tant que fonction du temps (t) pendant le fonctionnement.

3. Procédé selon la revendication 1 ou 2, **caractérisé en ce que** le moment (t0) pour le départ du fonctionnement est déterminé par un dispositif de commande (2) de l'appareil ménager (1, 10 - 16), interne à l'appareil.

4. Procédé selon la revendication 1 ou 2, **caractérisé en ce que** le moment (t0) pour le départ du fonctionnement est déterminé par un appareil de commande (9, 17) séparé de l'appareil ménager (1, 10 - 16), lequel transmet à l'appareil ménager (1, 10 - 16) des données avec des informations sur le moment (t0).

5. Procédé selon l'une quelconque des revendications précédentes, **caractérisé en ce que** le moment (t0) pour le départ est sorti comme proposition à l'aide d'un dispositif de sortie (5).

6. Procédé selon l'une quelconque des revendications 1 à 4, **caractérisé en ce qu'**au moment déterminé (t0), le fonctionnement est déclenché automatiquement par un dispositif de commande (2, 9).

7. Procédé selon l'une quelconque des revendications précédentes, **caractérisé en ce que** le moment (t0) pour le départ du fonctionnement est déterminé suivant des critères prédéfinis concernant aussi bien les coûts de l'ensemble du fonctionnement pour l'au moins une ressource d'exploitation qu'une durée (T6) entre un moment actuel (tA) et le départ du fonctionnement.

8. Procédé selon l'une quelconque des revendications précédentes, **caractérisé par** :
- réception d'une entrée qui est réalisée sur un dispositif de commande (5) et au moyen de laquelle un programme de fonctionnement est sélectionné pour le fonctionnement, et
- au cas où la durée (T5) du fonctionnement soit plus longue que le premier intervalle de temps (T2, T4), proposition d'un programme de fonctionnement qui est plus court dans sa durée (T5) par rapport au programme de fonctionnement sélectionné.

9. Procédé selon l'une quelconque des revendications précédentes, **caractérisé par** :
- réception d'une entrée qui est réalisée sur un dispositif de commande (5) et au moyen de laquelle un programme de fonctionnement est sélectionné pour le fonctionnement, et
- au cas où le premier intervalle de temps (T2, T4) ne commence pas pendant une période de temps prédéfinie à partir du moment actuel (tA) et/ou au cas où le premier intervalle de temps (T2, T4) soit plus court qu'une valeur limite, proposition d'un programme de fonctionnement qui est plus économique, quant à sa consommation de la ressource d'exploitation, par rapport au programme de fonctionnement sélectionné.

10. Procédé selon l'une quelconque des revendications précédentes, **caractérisé en ce que** l'appareil ménager transmet à un appareil externe (9, 17) :
- des données avec des informations sur le profil de consommation temporel (VP) de l'appareil ménager (1, 10 - 16) et/ou
- des données avec des informations sur le moment (t0) pour le départ du fonctionnement et/ou
- des données avec des informations sur une durée (T5) du fonctionnement.

11. Dispositif (2, 9, 17) destiné au fonctionnement d'un appareil ménager (1, 10 - 16) comprenant :
- des moyens (2, 9, 17) destinés à recevoir des données avec des informations sur un profil de coûts temporel (KP) d'une ressource d'exploitation, lequel comprend au moins un premier intervalle de temps (T2, T4) à moindres coûts et un deuxième intervalle de temps (T2, T4) à coûts élevés pour la ressource d'exploitation,
- des moyens (2, 9, 17) destinés à comparer une durée (T5) d'un fonctionnement de l'appareil ménager (1, 10 - 16) avec le premier intervalle de temps (T2, T4), et
- des moyens (2, 9, 17) destinés à déterminer un moment (t0) pour le départ du fonctionnement en fonction d'un résultat de la comparaison,
**caractérisé par**
- des moyens (2, 9, 17) destinés à déterminer un segment de programme temporel (6, 7, 8) avec une consommation de la ressource d'exploitation plus élevée par rapport à d'autres segments de programme, à l'aide d'un profil de consommation temporel (VP) qui décrit une consommation de la ressource d'exploitation par l'appareil ménager (1, 10 - 16) pendant le fonctionnement, au cas où la durée (T5) du fonctionnement soit plus longue que le premier intervalle de temps (T2, T4) et,
- des moyens (2, 9, 17) destinés à déterminer le moment (t0) pour le départ de manière à ce que le segment de programme (6, 7, 8) coïncide avec la consommation élevée de la ressource d'exploitation dans le premier intervalle de temps (T2, T4).

12. Appareil ménager (1, 10 - 16) comprenant un dispositif (2, 9, 17) selon la revendication 11, lequel peut être mis en fonctionnement avec le dispositif (2, 9, 17).
